Europäisches Patentamt

European Patent Office

Office européen des brevets

(11) Veröffentlichungsnummer: **0 219 572**
A1

(12) # EUROPÄISCHE PATENTANMELDUNG

(21) Anmeldenummer: 85113578.0

(51) Int. Cl.⁴: **F16K 31/08**

(22) Anmeldetag: 25.10.85

(43) Veröffentlichungstag der Anmeldung:
29.04.87 Patentblatt 87/18

(84) Benannte Vertragsstaaten:
**DE**

(71) Anmelder: **Leybold-Heraeus GmbH
Bonner Strasse 504 Postfach 51 07 60
D-5000 Köln 51(DE)**

(72) Erfinder: **Pfaff, Hansen, Dr.
Heddinghovener Strasse 27
D-5042 Erftstadt-Lechenich(DE)**

(74) Vertreter: **Leineweber, Jürgen, Dipl.-Phys.
Am Heidstamm 78 a
D-5000 Köln 40(DE)**

(54) **Betätigungsvorrichtung für Vakuumventile.**

(57) Um bei einer Betätigungsvorrichtung für Vakuumventile mit einem zwischen zwei Stellungen hin-und herbewegbaren Anker (7), der mit einem Verschlußelement (5) in Verbindung steht, einer Spule (9) und einem Permanentmagneten (12) die Erzeugung hoher Schließkäfte zu ermöglichen, wird vorgeschlagen, dem aus Weicheisen bestehenden Anker (7) eine in Schließrichtung wirkende Feder - (11) zuzuordnen; die von der Feder (11) und von dem Permanentmagneten (12) auf den Anker (7) ausgeübten Kräfte sind entgegengerichtet und so bemessen, daß in der ersten Stellung, in der der Anker und der Permanentmagnet einander anliegen, die anziehend wirkende Magnetkraft überwiegt und in der zweiten Stellung, in der der Anker vom Permanentmagneten beabstandet ist, die Federkraft überwiegt; die Verstellung des Ankers (7) von seiner ersten Stellung in seine zweite Stellung und umgekehrt erfolgt durch Stromstöße durch die Spule (9) von einer solchen Dauer, Stärke und Richtung, daß die in der jeweiligen Stellung des Ankers wirkende Kraft überwunden wird.

FIG. 1

## Betätigungsvorrichtung für Vakuumventile

Die Erfindung bezieht sich auf eine Betätigungsvorrichtung für Vakuumventile mit einem zwischen zwei Stellungen hin-und herbewegbaren Anker, der mit einem Verschlußelement in Verbindung steht, einer Spule und einem Permanentmagneten.

Aus der DE-AS 12 32 424 ist eine Betätigungsvorrichtung dieser Art bekannt. Um bei der vorbekannten Lösung zu erreichen, daß es sowohl in seiner Offen-als auch in seiner Schließstellung stromlos ist, wird vorgeschlagen, als Verschlußelement einen radial magnetisierten Zylindermagneten mit einem Eisenkern und einem Eisenmantel zu verwenden. Diesem Zylindermagneten sind topfförmige Elektromagnete axial zugeordnet, mit denen die Verstellung des Verschlußelementes erfolgt. Nachteilig an dieser Lösung ist der komplizierte Aufbau des als Verschlußelement dienenden Ankers. Er umfaßt mindestens fünf Einzelteile. Die Zwischenräume zwischen diesen Teilen müssen durch eingeschlämmtes Eisenpulver ausgefüllt werden. Ein weiterer Nachteil besteht darin, daß hohe Schließkräfte nicht erzeugt werden können, da infolge des vorhandenen Dichtringes eine Berührung von Verschlußelement (Anker) und Eisenkern nicht möglich ist. Gerade in der Schließstellung können damit die Magnetkräfte nicht voll genutzt werden.

Der Erfindung liegt die Aufgabe zugrunde, eine Betätigungsvorrichtung für Vakuumventile der eingangs genannten Art zu schaffen, welche die beschriebenen Nachteile des Standes der Technik nicht mehr aufweist.

Erfindungsgemäß wird diese Aufgabe durch die folgenden Merkmale gelöst:

-Dem aus Weicheisen bestehenden Anker ist eine in Schließrichtung wirkende Feder zugeordnet,

-dem Anker ist der Permanentmagnet im Bereich der Spule feststehend zugeordnet,

-die von der Feder und von dem Permanentmagneten auf den Anker ausgeübten Kräfte sind

a) entgegengerichtet und

b) so bemessen, daß in der ersten Stellung, in der der Anker und der Permanentmagnet einander anliegen, die anziehend wirkende Magnetkraft überwiegt und in der zweiten Stellung, in der der Anker vom Permanentmagneten beabstandet ist, die Federkraft überwiegt und

-die Verstellung des Ankers seiner ersten Stellung in seine zweite Stellung und umgekehrt erfolgt durch Stromstöße durch die Spule von einer solchen Dauer, Stärke und Richtung, daß die in der jeweiligen Stellung des Ankers wirkende Kraft überwunden wird.

Eine Betätigungsvorrichtung für Vakuumventile mit diesen Merkmalen hat einen relativ einfachen Aufbau. Sie ermöglicht eine bistabile Betriebsweise mit nur einer Spule. In der Offenstellung "klebt" der Anker an dem Magneten, so daß die vorhandene Magnetkraft voll wirksam ist. Zur Erzeugung der Schließkraft können relativ starke Federn verwendet werden.

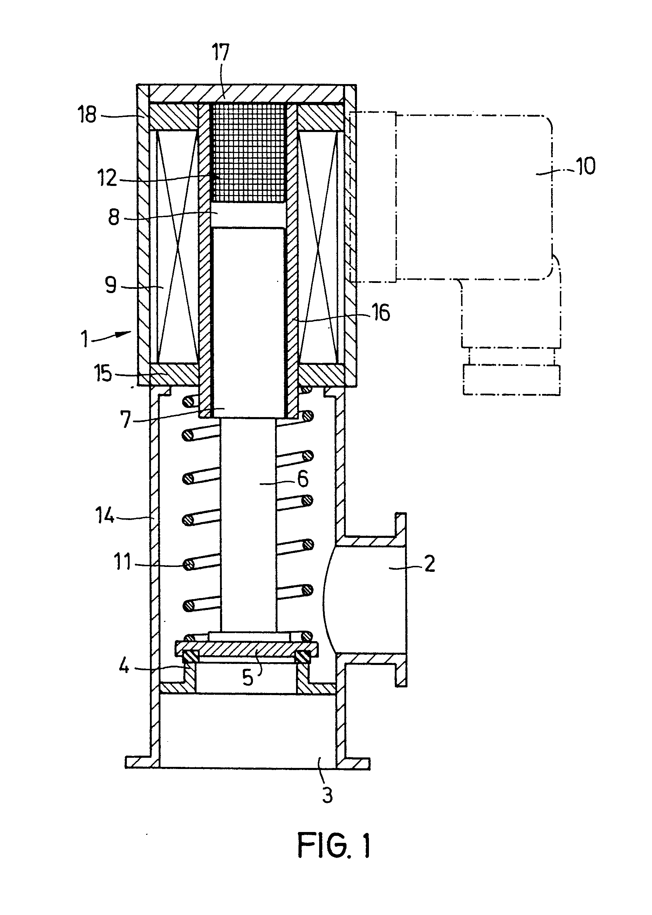

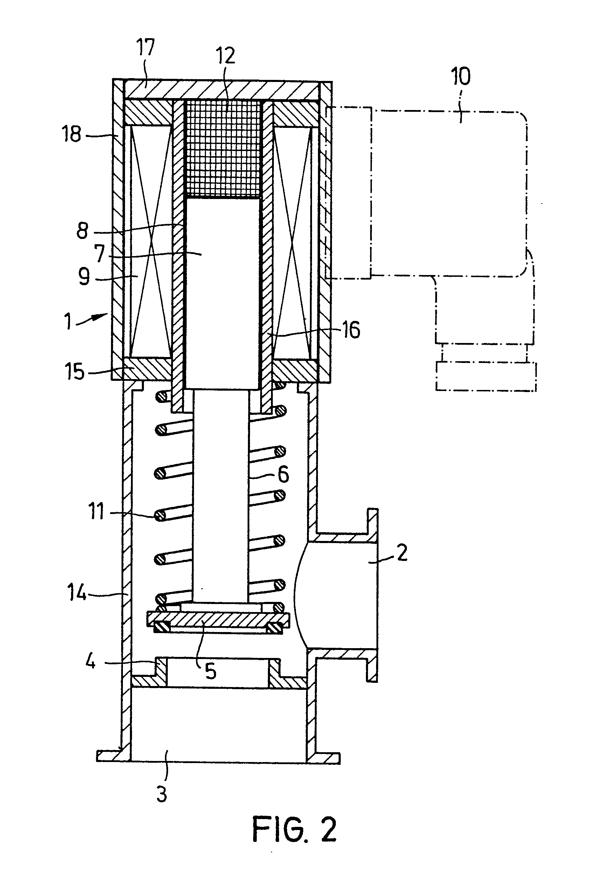

Weitere Vorteile und Einzelheiten der Erfindung sollen anhand der Figuren 1 und 2 erläutert werden, die ein erfindungsgemäß ausgerüstetes Ventil in seiner Offen-und in seiner Schließstellung zeigen.

Das dargestellte, magnetisch betätigbare Eckventil 1 hat die Anschlußstutzten 2, 3, zwischen denen der Ventilsitz 4, der Ventilteller 5 und der Ventilstempel 6 angeordnet sind. Das dem Ventilteller 5 gegenüberliegende Ende des Ventilstempels 6 bildet einen Anker 7, der aus nichtmagnetischem Werkstoff (Weicheisen) besteht und innerhalb des Ankerraumes 8 der Spule 9 angeordnet ist. Über den Anschluß 10 erfolgt die elektrische Versorgung der Spule 9.

Der Ventilteller 5 und damit der Anker 7 stehen unter der Wirkung der Druckfeder 11, die in Schließrichtung wirkt. Zusätzlich ist im Bereich der Spule 9, zumindest teilweise in den Ankerraum 8 hineinragend, der Permanentmagnet 12 vorgesehen, der auf den Anker eine in Richtung der Öffnungsbewegung des Ventiltellers 5 wirkende Kraft ausübt.

Das Innere des Ventils 1 ist gekapselt. Dazu ist das mit den Anschlußstutzen 2 und 3 ausgerüstete Gehäuseteil 14 vorgesehen. Dieses ist vakuumdicht mit dem Flansch 15 verbunden, der seinerseits mit einem den Ankerraum 8 der Spule 9 bildenden Führungsrohr 16 dicht verbunden ist. Der in den Ankerraum 8 der Spule hineinragende Permanentmagnet 12 bildet gemeinsam mit der stirnseitig angeordneten Scheibe 17 den dichten Verschluß des Führungsrohres 16 nach außen. Die Scheibe 17 und auch der die Spule 9 umgebende Mantel 18 bestehen aus Eisen und bilden damit eine Abschirmung.

In Fig. 1 ist das Ventil in seiner Schließstellung dargestellt. In dieser Stellung überwiegt bei stromloser Spule 9 die Kraft der Feder 11. Das Öffnen des Ventils erfolgt mit Hilfe eines Stromstoßes durch die Spule 9, der in bezug auf Stärke, Dauer und Richtung so gewählt ist, daß die Federkraft überwunden und der Anker 7 in Richtung Permanentmagnet 12 bewegt wird. Bei einem unmittelbaren Kontakt von Permanentmagnet 12 und Anker 7 sind die anziehenden Magnetkräfte so stark, daß die Federkraft überwunden wird. Ein Haltestrom in der Spule 9 ist nicht mehr erforderlich.

Das Schließen des Ventils erfolgt mit einem Stromstoß durch die Spule 9, der die in der Offenstellung wirkenden Magnetkräfte überwindet. Bei mit Gleichstrom betriebener Spule kann der dem Schließen der Ventils dienende Stromstoß dem Öffnungs-Stromstoß entsprechen und nur bezüglich seiner Richtung verschieden sein. Infolge des Stromstoßes löst sich der Anker 7 vom Permanentmagneten 12. Bei vom Permanentmagneten 12 beabstandeten Anker 7 überwiegen die Federkräfte, so daß das Ventil wieder stromloser Spule seine Schließstellung beibehält.

## Ansprüche

1. Betätigungsvorrichtung für Vakuumventile mit

-einem zwischen zwei Stellungen hin-und herbewegbaren Anker (7), der mit einem Verschlußelement (5) in Verbindung steht,

-einer Spule (9) und

-einem Permanentmagneten (12),

**gekennzeichnet** durch die folgenden Merkmale:

-dem aus Weicheisen bestehenden Anker (7) ist eine in Schließrichtung wirkende Feder (11) zugeordnet,

-dem Anker (7) ist der Permanentmagnet (12) im Bereich der Spule (9) feststehend zugeordnet,

-die von der Feder (11) und von dem Permanentmagneten (12) auf den Anker (7) ausgeübten Kräfte sind a) entgegengerichtet und

b) so bemessen, daß in der ersten Stellung, in der der Anker und der Permanentmagnet einander anliegen, die anziehend wirkende Magnetkraft überwiegt und in der zweiten Stellung, in der der Anker vom Permanentmagneten beabstandet ist, die Federkraft überwiegt und

-die Verstellung des Ankers (7) von seiner ersten Stellung in seine zweite Stellung und umgekehrt erfolgt durch Stromstöße durch die Spule (9) von einer solchen Dauer, Stärke und Richtung, daß die in der jeweiligen Stellung des Ankers wirkende Kraft überwunden wird.

2. Betätigungsvorrichtung nach Anspruch 1,

**dadurch gekennzeichnet,** daß der Permanentmagnet (12) zumindest teilweise in den Ankerraum - (8) hineinragt.

3. Betätigungsvorrichtung nach Anspruch 1 oder 2,

**dadurch gekennzeichnet,** daß der Innenraum des Ventils (1) vakuumdicht gekapselt ist.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENTS ABSTRACTS OF JAPAN, Band 7, Nr. 165, 20. Juli 1983, Seite 152 M 230; & JP - A - 58 72 783 (MATSUSHITA DENKI SANGYO K.K.) 30.04.1983 | 1,2 | F 16 K 31/08 |
| | --- | | |
| X | PATENTS ABSTRACTS OF JAPAN, Band 8, Nr. 186, 25. August 1984, Seite 138 M 320; & JP - A - 59 77 182 (HITACHI SEISAKUSHO K.K.) 02.05.1984 | 1,2 | |
| | --- | | |
| X | FR-A-2 544 834 (NEPVEU) * Insgesamt * | 1,2 | |
| | --- | | |
| X | CH-A- 426 414 (LUCIFER) * Insgesamt * | 1,2 | |
| | --- | | **RECHERCHIERTE SACHGEBIETE (Int. Cl.4)** |
| X | US-A-3 379 214 (WEINBERG) * Figuren 1-3 * | 1,2 | F 16 K |
| | --- | | |
| X | US-A-4 469 304 (KAH) * Insgesamt * | 1,2 | |
| | --- | | |
| A | EP-A-0 089 563 (CONTZEN) | | |
| | --- | | |
| D,A | DE-B-1 232 424 (WOLLANK) | | |
| | ----- | | |

Der vorliegende Recherchenbericht wurde für alle Patentansprüche erstellt.

| Recherchenort DEN HAAG | Abschlußdatum der Recherche 15-05-1986 | Prüfer VERELST P.E.J. |
|---|---|---|